# EUROPÄISCHE PATENTSCHRIFT

(11) **EP 2 123 929 B1**
(45) Veröffentlichungstag und Bekanntmachung des Hinweises auf die Patenterteilung: **23.03.2011**
(21) Anmeldenummer: 09159019.0
(22) Anmeldetag: 29.04.2009
(51) Int. Cl.: F16D 25/04

(54) **Kopplungsanordnung, insbesondere zur wahlweisen Drehkopplung einer Eingangswelle eines Kompressors in einem Fahrzeug mit einem Antriebsorgan**
Coupling assembly, in particular for optional rotational coupling of an entry shaft, in particular of a compressor in a vehicle, with a drive organ
Agencement d'accouplement, notamment destiné à l'accouplement rotatif sélectif d'un arbre d'entrée d'un compresseur dans un véhicule doté d'un organe d'entraînement

(30) Priorität: 05.11.2008 DE 102008043484; 07.05.2008 DE 102008001609
(43) Veröffentlichungstag der Anmeldung: 25.11.2009
(73) Patentinhaber: ZF Friedrichshafen AG, 88038 Friedrichshafen (DE)
(72) Erfinder: Abu Snima, Khalid, Dr., 97520 Röthlein (DE); Eck, Andreas, 97469 Gochsheim (DE); Groß, Matthias, 97447 Gerolzhofen (DE)

(56) Entgegenhaltungen:
- US-A- 2 981 392
- US-A- 5 199 542
- US-B1- 6 315 096

## Beschreibung

Die vorliegende Erfindung betrifft eine Kopplungsanordnung, mit welcher vorzugsweise in einem Kraftfahrzeug, insbesondere einem Nutzkraftfahrzeug, ein von einem Antriebsaggregat abgegriffenes Antriebsdrehmoment wahlweise zu einem Kompressor geleitet werden kann, also eine Verbindung zwischen einer Kompressoreingangswelle und einem Nebenabtrieb eines Antriebsaggregats hergestellt oder unterbrochen werden kann.

Eine Kopplungsanordnung zur wahlweisen Drehkopplung eines wellenförmigen Antriebsorgans mit einem als Schwungmasse ausgebildeten Antriebsorgan ist aus der US 5,199,542 A bekannt. Diese Kopplungsanordnung weist einen mit dem Antriebsorgan zur gemeinsamen Drehung um eine Drehachse gekoppelten ersten Reibelemententräger auf, mit welchem die Reibelemente einer ersten Gruppe von Reibelementen drehfest und bezüglich diesem axial bewegbar gekoppelt sind, sowie einen mit dem Abtriebsorgan zur gemeinsamen Drehung um die Drehachse gekoppelten zweiten Reibelemententräger, mit welchem die Reibelemente einer zweiten Gruppe von Reibelementen drehfest und bezüglich diesem axial bewegbar gekoppelt sind. Der zweite Reibelemententräger ist mit einem als Anpressplatte wirksamen Ausgangselement drehfest, aber axial verlagerbar, verbunden, wobei das Ausgangselement ein erstes axiales Widerlager für die beiden Gruppen von Reibelementen bildet, der zweite Reibelemententräger dagegen ein zweites axiales Widerlager. Das Ausgangselement wird mittels einer als Kraftbeaufschlagungselement wirksamen Tellerfeder in Richtung zum zweiten Widerlager vorgespannt, und hält somit die beiden Gruppen von Reibelementen in Reibverbindung miteinander. Die Kopplungsanordnung ist dann also eingerückt. Es bleibt zu ergänzen, dass beide Gruppen von Reibelementen in einem mit viskosen Medium befüllten Raum angeordnet und somit geschmiert und gekühlt sind.

Zum Ausrücken der Kopplungsanordnung, also zum Lösen der Reibverbindung zwischen den beiden Gruppen von Reibelementen, wird eine im Abtriebsorgan vorgesehene Druckkammer einer Zylinder/Kolben-Betätigungsanordnung, die zur Beaufschlagung des Kraftbeaufschlagungselements mit einer Betätigungskraft vorgesehen ist, mit einem Überdruck beaufschlagt, und hierdurch ein membranartiger Kolben gegen die Wirkung einer Gegenfeder ausgelenkt. Durch den Kolben wird ein Hebel betätigt, der mit dem Ausgangselement verbunden ist und dieses durch einen Abhub von den Reibelementen trennt, und zwar gegen die Wirkung des Kraftbeaufschlagungselements. Auch der Kolben sowie der Hebel sind somit Teil der Betätigungsanordnung.

Das Kraftbeaufschlagungselement ist einerends am Abtriebsorgan und anderenends am Ausgangselement abgestützt. Dadurch wirkt das Kraftbeaufschlagungselement ohne Hebelübersetzung auf das Ausgangselement, und vermag somit bei üblicher Dimensionierung lediglich eine begrenzte Einrückkraft aufzubringen.

Die DE 80 21 411 U1 offenbart eine für diesen Zweck vorgesehene Kopplungsanordnung in Form einer Lamellenkupplung. Ein Außenlamellenträger ist mit einem Antriebsorgan, im dargestellten Beispiel einer Riemenscheibe, zur gemeinsamen Drehung verbunden. Ein Innenlamellenträger ist mit einer Kompressoreingangswelle zur gemeinsamen Drehung verbunden. Am Innenlamellenträger ist ein Widerlager für die Außenlamellen und die Innenlamellen gebildet. Eine Anpressplatte wird durch mehrere Vorspannfedern axial in Richtung auf dieses Widerlager zu belastet, wodurch die Innenlamellen und die Außenlamellen miteinander in Reibeingriff gepresst werden und dabei zwischen dem Widerlager und der Anpressplatte eingespannt sind. Zum Ausrücken dieser Kopplungsanordnung durchgreifen mehrere Betätigungsbolzen die Innenlamellen und das am Innenlamellenträger vorgesehene Widerlager und sind mit der Anpressplatte axial fest verbunden. Eine am Kompressorgehäuse vorgesehene Betätigungsanordnung belastet über ein Drehentkopplungslager diese Bolzen, um somit eine Ausrückkraft auf die Anpressplatte zu leiten.

Es ist die Aufgabe der vorliegenden Erfindung, eine Kopplungsanordnung, insbesondere zur wahlweisen Drehkopplung einer Eingangswelle eines Kompressors in einem Fahrzeug mit einem Antriebsorgan, vorzusehen, mit welcher bei einfachem Aufbau eine einfache und zuverlässige Betätigung zum Einrücken und Ausrücken bei großer Einrückkraft realisierbar ist.

Erfindungsgemäß wird diese Aufgabe gelöst durch eine Kopplungsanordnung, insbesondere zur wahlweisen Drehkopplung einer Eingangswelle eines Kompressors in einem Fahrzeug mit einem Antriebsorgan, umfassend einen mit einem Antriebsorgan zur gemeinsamen Drehung um eine Drehachse gekoppelten oder zu koppelnden ersten Reibelemententräger, mit welchem die Reibelemente einer ersten Gruppe von Reibelementen drehfest und bezüglich diesem axial bewegbar gekoppelt sind, einen zweiten Reibelemententräger, mit welchem die Reibelemente einer zweiten Gruppe von Reibelementen drehfest und bezüglich diesem axial bewegbar gekoppelt sind, ein mit einem Abtriebsorgan zur gemeinsamen Drehung um die Drehachse gekoppeltes oder zu koppelndes Ausgangselement, mit welchem der zweite Reibelemententräger im Wesentlichen drehfest, axial bezüglich diesem bewegbar gekoppelt ist, eine Kraftbeaufschlagungsanordnung, durch welche die Reibelemente der ersten Gruppe und der zweiten Gruppe in Reibwechselwirkung miteinander pressbar sind, wobei an dem Ausgangselement ein erstes axiales Widerlager für die beiden Gruppen von Reibelementen gebildet ist und an dem zweiten Reibelemententräger ein zweites axiales Widerlager für die beiden Gruppen von Reibelementen gebildet ist, die Kraftbeaufschlagungsanordnung ein bezüglich des zweiten Reibelemententrägers und des Ausgangselements abgestützes und den zweiten Reibelemententräger mit dem zweiten Widerlager axial auf das Ausgangselement mit dem ersten Widerlager zu vorspannendes Kraftbeaufschlagungselement umfasst, und eine Zylinder/Kolben-Betätigungsanordnung zur Beaufschlagung des Kraftbeaufschlagungselements mit einer Betätigungskraft vorgesehen ist, wobei das Kraftbeaufschlagungselement membran- oder tellerfederartig ausgebildet ist, in seinem radial äußeren Bereich bezüglich des Ausgangselements abgestützt ist und in seinem radial inneren Bereich durch eine Betätigungsanordnung beaufschlagbar ist, und wobei in einem Bereich zwischen dem radial äußeren Bereich und dem radial inneren Bereich das Kraftbeaufschlagungselement bezüglich des zweiten Reibelemententrägers abgestützt ist.

Bei der vorliegenden Erfindung ist also der gesamte zweite Reibelemententräger zur Durchführung von Ein- und Ausrückvorgängen verlagerbar, während das mit diesem drehfeste Ausgangselement an ein Abtriebsorgan, also beispielsweise die Eingangswelle eines Kompressors, fest angebunden ist. Dies gestattet einen Aufbau, bei welchem eine Betätigungskraft auf das Kraftbeaufschlagungselement der Kraftbeaufschlagungsanordnung axial beispielsweise von der Seite eines Kompressors her auf dieses geleitet wird, ohne dabei die bezüglich des am Ausgangselement dann an der anderen axialen Seite angeordneten Reibelemente der beiden Gruppen von Reibelementen axial durchgreifen zu müssen. Zugunsten eines besonders einfach realisierbaren und hinsichtlich der Erzeugung einer Einrückkraft sehr effizient arbeitenden Aufbaus wird vorgeschlagen, dass das Kraftbeaufschlagungselement, das membran- oder tellerfederartig ausgebildet ist, in seinem radial äußeren Bereich bezüglich des Ausgangselements abgestützt ist und in seinem radial inneren Bereich durch eine Betätigungsanordnung beaufschlagbar ist, wobei in einem Bereich zwischen dem radial äußeren Bereich und dem radial inneren Bereich das Kraftbeaufschlagungselement bezüglich des zweiten Reibelemententrägers abgestützt ist.

Die Betätigungsanordnung kann beispielsweise ein mit dem Ausgangselement drehbares und auf den radial inneren Bereich des Kraftbeaufschlagungselements einwirkendes Betätigungselement umfassen.

Um dieses Betätigungselement gegen übermäßig starke Bewegung in Richtung vom Kraftbeaufschlagungselement weg zu sichern und eine auch dieses Betätigungselement umfassende Vormontage-Baugruppe bereit stellen zu können, wird weiter vorgeschlagen, dass dem Betätigungselement am Ausgangselement ein Bewegungsanschlag für die Bewegung in Richtung vom Kraftbeaufschlagungselement weg zugeordnet ist.

Die vorliegende Erfindung wird nachfolgend mit Bezug auf die beiliegenden Figuren detailliert beschrieben. Es zeigt:
- Fig. 1: eine Längsschnittansicht einer Kopplungsanordnung zum Einleiten eines Antriebsdrehmoments in einen Kompressor in einem Fahr- zeug;
- Fig. 2: eine der Fig. 1 entsprechende Darstellung einer alternativen Ausge- staltungvariante;
- Fig. 3: eine Teil-Längsschnittansicht einer Kopplungsanordnung gemäß einer alternativen Ausgestaltungsart;
- Fig. 4: eine Querschnittansicht eines mit einem Ausgangselement drehgekoppelten Kraftbeaufschlagungselements.

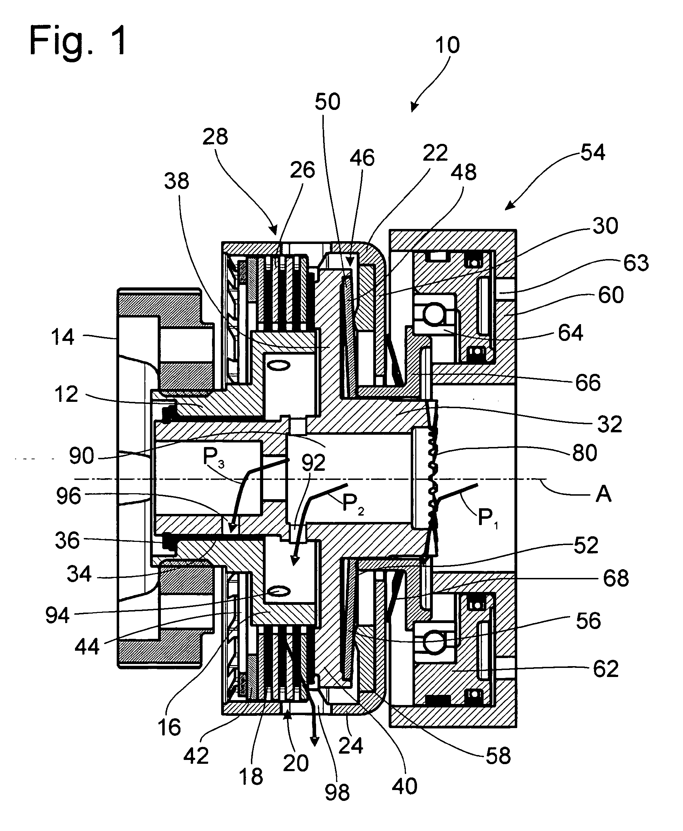

In Fig. 1 ist eine Kopplungsanordnung zur Übertragung eines Antriebsdrehmoments zwischen einem Antriebsaggregat in einem Fahrzeug und einem Kompressor zur Bereitstellung von Druckluft allgemein mit 10 bezeichnet. Diese Kopplungsanordnung 10 ist nach Art einer so genannten nasslaufenden Lamellenkupplung ausgebildet. Ein hinsichtlich der Einleitung eines Antriebsdrehmoments eingangsseitiger, innerer erster Reibelementententräger 12 ist beispielsweise durch ein Gewinde oder eine Verzahnung mit einem als Antriebsorgan hier wirksamen Antriebszahnrad 14 fest verbunden. Dieses kann über einen Riemen- oder Kettentrieb ein Antriebsdrehmoment von einem Nebenabtriebsbereich eines Antriebsaggregats, beispielsweise einer Brennkraftmaschine in einem Nutzkraftfahrzeug, aufnehmen. In einem erweiterten, näherungsweise zylindrischen Bereich 16, ist der erste Reibelemententräger 12 mit einer Außenverzahnung ausgebildet und trägt dort die Reibelemente 18 einer ersten Gruppe 20 von Reibelementen.

Ein abtriebsseitig liegender, äußerer zweiter Reibelemententräger 22 umgreift mit einem im Wesentlichen zylindrischen Bereich 24 den erweiterten zylindrischen Bereich 16 des ersten Reibelemententrägers 12 und ist in diesem zylindrischen Bereich 24 mit einer Innenverzahnung ausgebildet, mit welcher die Reibelemente 26 einer zweiten Gruppe 28 von Reibelementen in Eingriff stehen. Die beiden Gruppen 20, 28 von Reibelementen stehen also mit ihrem jeweils zugeordneten Reibelemententräger 12 bzw. 22 in Drehkopplungseingriff, sind bezüglich diesem jedoch axial verlagerbar.

Der zweite Reibelemententräger 22 ist im Allgemeinen topfartig ausgebildet und greift mit einem an den im Wesentlichen zylindrischen Bereich 24 anschließenden Bodenbereich 30 nach radial innen.

Ein allgemein mit 32 bezeichnetes Ausgangselement erstreckt sich axial, axial bezogen auf eine Drehachse A der Kopplungsanordnung 10, bis in den Bereich des ersten Reibelemententrägers 12 und ist bezüglich diesem beispielsweise über ein Gleitlager 34 radial und drehbar gelagert. Ein am Ausgangselement 32 vorgesehener Sicherungsring 36 sorgt für eine axiale Sicherung des Ausgangselements 32 bezüglich des ersten Reibelemententrägers 12 in Richtung von dem Antriebszahnrad 14 weg.

Mit einem scheibenartigen Bereich 38 erstreckt sich das Ausgangselement 32 nach radial außen bis in den Bereich der beiden Gruppen 20, 28 von Reibelementen, welche allgemein auch als Lamellen bezeichnet werden können und beispielsweise als Metallscheiben, ggf. mit daran angebrachten Reibbelägen, ausgebildet sein können. In diesem radial äußeren Bereich bildet der scheibenartige Bereich 38 des Ausgangselements 32 ein erstes Widerlager 40 für die beiden Gruppen 20, 28 von Reibelementen. Insbesondere erkennt man, dass an dieses erste Widerlager 40 ein axial erstes Reibelement 18 der ersten Gruppe 20 von Reibelementen unmittelbar anschließt.

An der anderen axialen Seite der beiden Gruppen 20, 28 von Reibelementen bildet ein Widerlagerring 42 ein zweites axiales Widerlager. Der Widerlagerring 42 ist durch einen Sicherungsring 44 axial am im Wesentlichen zylindrischen Bereich 24 des zweiten Reibelemententrägers 22 abgestützt und weist beispielsweise auch eine Außenverzahnung auf, die mit der Verzahnung am zweiten Reibelemententräger 22 in Eingriff steht, so dass auch der Widerlagerring 42 mit dem zweiten Reibelemententräger 22 und insbesondere dem unmittelbar an diesen anschließenden Reibelement 26 der zweiten Gruppe 28 von Reibelementen drehfest ist.

Um eine drehmomentenmäßige Kopplung des zweiten Reibelemententrägers 22 mit dem Ausgangselement 32 zu realisieren, kann an der Innenseite des im Wesentlichen zylindrischen Bereichs 24 des zweiten Reibelemententrägers 22 eine hierfür vorgesehene Verzahnung realisiert sein, beispielsweise auch die für die Reibelemente 26 vorgesehene Verzahnung weitergeführt sein, mit welcher eine entsprechende Außenverzahnung am Ringbereich 38 des Ausgangselements 32 in Drehentkopplungseingrifft steht, so dass die Axialbewegbarkeit des zweiten Reibelemententrägers 32 gewährleistet ist.

Eine allgemein mit 46 bezeichnete Kraftbeaufschlagungsanordnung umfasst ein beispielsweise membranfederartig bzw. tellerfederartig ausgestaltetes Kraftbeaufschlagungselement 48. Dieses stützt sich in seinem radial äußeren Bereich 50 am radial äußeren Bereich des ringartigen Bereichs 38 des Ausgangselements 32 und somit auch bezüglich des ersten Widerlagers 40 ab. In einem radial inneren Bereich 52 wird, wie im Folgenden noch beschrieben, das Kraftbeaufschlagungselement 48 durch eine Betätigungsanordnung 54 zur Durchführung von Ein- bzw. Ausrückvorgängen belastet. In einem dazwischen liegenden radial mittleren Bereich 56 ist das Kraftbeaufschlagungselement 48 axial bezüglich des zweiten Reibelemententrägers 22 bzw. eines daran vorgesehenen Abstützrings 58 abgestützt. Das Kraftbeaufschlagungselement 48 ist vorgespannt eingebaut und erzeugt eine axial gerichtete Kraft, welche in der Darstellung der Fig. 1 den zweiten Reibelemententräger 22 mit seinem Bodenbereich 30 in Richtung von dem ersten Widerlager 40 weg belastet. Dies ist also eine Vorspannwirkung, welche gleichzeitig das zweite Widerlager, also den Widerlagerring 42, in Richtung auf das erste Widerlager 40 zu belastet und dabei eine Einspannung der Reibelemente 18, 26 der beiden Gruppen 20, 28 von Reibelementen zwischen den beiden Widerlagern 40 bzw. 42 erzeugt und somit die Kopplungsanordnung 10 in einen Einrückzustand bringt. Diese Kopplungsanordnung 10 ist also grundsätzlich von dem Normal-Geschlossen-Typ, welcher bei fehlender externer Betätigungskraft in einem Einrückzustand und somit einem Zustand ist, in welchem ein Drehmoment von dem Antriebszahnrad 14 über die reibmäßig in Wechselwirkung stehenden Reibelemente 18, 26 auf das Ausgangselement 32 und ein damit gekoppeltes Abtriebsorgan leitet.

Die Betätigungsanordnung 54 ist nach Art einer Kolben/Zylinder-Betätigungsanordnung aufgebaut und umfasst beispielsweise integriert in ein Kompressorgehäuse einen ringartigen Zylinder 60, in welchem ein Ringkolben 62 grundsätzlich axial bewegbar ist.

Durch eine oder mehrere Zuführöffnungen 63 kann Druckfluid, im Falle der Kombination mit einem Kompressor vorzugsweise Druckluft, in den Innenraum des Zylinders 60 eingeleitet werden und damit eine den Ringkolben 62 axial in Richtung auf den zweiten Reibelemententräger 22 zu belastende Kraft erzeugen. Über ein Drehentkopplungslager 64 belastet der Ringkolben 62 ein ringartiges Betätigungselement 66, das mit seinem radial inneren Bereich den Bodenbereich 30 des zweiten Reibelemententrägers 22 durchgreift und auf den radial inneren Bereich 52 des Kraftbeaufschlagungselements 48 einwirken kann und das auf dem Ausgangselement 32 zur Axialbewegung geführt sein kann.

Um bei Durchführung von Auskuppelvorgängen, also bei der Verlagerung des Betätigungselements 66 in Richtung auf das Kraftbeaufschlagungselement 48 zu, dafür zu sorgen, dass die Reibwechselwirkung der Reibelemente 18, 26 tatsächlich auch aufgehoben wird, ist für den zweiten Reibelemententräger 22 ein beispielsweise tellerfederartig ausgebildetes Vorspannelement 68 vorgesehen. Dieses ist im Wesentlichen ringartig ausgestaltet und stützt sich am zweiten Reibelemententräger 22 bzw. dessen Bodenbereich 30 einerseits und am Betätigungselement 66 andererseits ab. Somit ist bei vorgespanntem Einbau des Vorspannelements 68 grundsätzlich eine der Wirkung des Kraftbeaufschlagungselements 48 entgegen gerichtete Lüftkraft vorhanden, welche den zweiten Reibelemententräger 22 mit seinem Widerlagerring 42 in Richtung vom ersten Widerlager 40 weg belastet und bei entsprechender Beaufschlagung des Kraftbeaufschlagungselements 48 in seinem radial inneren Bereich 52 für eine derartige Verlagerung des zweiten Reibelemententrägers 22 sorgt. Da dieses Vorspannelement 68 sich an dem Betätigungselement 66 axial abstützt, das bei Durchführung von Ausrückvorgängen sich ebenfalls axial verlagert, und zwar in der gleichen Richtung, wie dies der zweite Reibelemententräger 22 tun soll, kann die den zweiten Reibelemententräger 22 in Richtung Ausrücken vorspannende Kraft für jede Phase eines derartigen Ausrückvorgangs im Wesentlichen konstant gehalten werden.

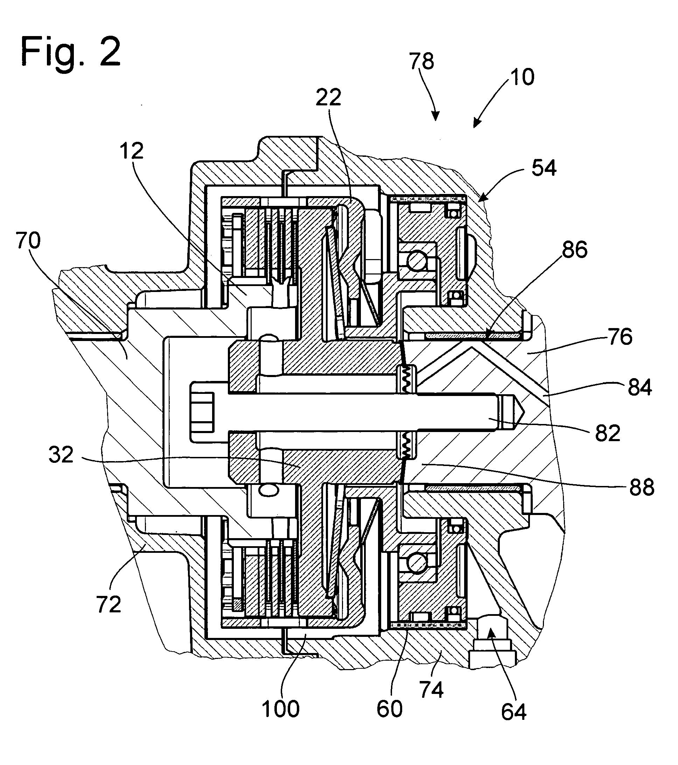

Eine abgewandelte Ausgestaltungsform der erfindungsgemäßen Kopplungsanordnung 10 ist in Fig. 2 erkennbar. Diese entspricht insbesondere hinsichtlich der Ausgestaltung der beiden Reibelemententräger 12, 22, der Betätigungsanordnung 54 bzw. auch der Durchführung von Ein- bzw. Auskuppelvorgängen dem vorangehend mit Bezug auf die Fig. 1 detailliert beschriebenen Aufbau, so dass auf die diesbezüglichen Ausführungen verwiesen werden kann. Man erkennt jedoch bei der Ausgestaltungsform gemäß Fig. 2, dass der erste Reibelemententräger 12, also der eingangsseitige, innere Reibelemententräger, nicht mit einem Antriebszahnrad oder dergleichen verbunden ist, sondern am axialen Endbereich einer Übertragungswelle 70 angeordnet ist. Diese ist in einem Gehäuse 72 drehbar gelagert, welches wiederum mit einem Kompressorgehäuse 74 fest verbunden ist. Die Übertragungswelle 70 kann an ihrem in der Fig. 2 erkennbaren Endbereich mit dem ersten Reibelemententräger 12 integral ausgebildet sein, also durch integrale Ausbildung mit diesem gekoppelt sein. Selbstverständlich ist es auch denkbar, den ersten Reibelemententräger 12 als separates Bauteil zu fertigen und ihn axial beispielsweise durch Verschraubung an der Übertragungswelle 70 festzulegen. In ihrem anderen, in der Fig. 2 nicht erkennbaren Bereich kann diese Übertragungswelle ein Antriebsdrehmoment beispielsweise dann über eine Antriebsscheibe oder ein Antriebszahnrad von einem Antriebsaggregat aufnehmen.

Man erkennt in der Fig. 2 weiter eine als Abtriebsorgan hier wirksame und im Kompressorgehäuse 74 drehbar gelagerte Eingangswelle 76 eines allgemein mit 78 bezeichneten Kompressors. Diese beispielsweise als Kurbelwelle ausgebildete Eingangswelle 76 kann einen oder mehrere Kompressorkolben antreiben, um im Einrückzustand der Kopplungsanordnung 10 Druckluft zu erzeugen, die dann auch genutzt werden kann, um durch eine Öffnung 63 bei entsprechender Freigabe durch ein Ventil den Ringkolben 62 zur Durchführung von Ein- bzw. Auskuppelvorgängen zu beaufschlagen.

Man erkennt in den Fig. 1 und 2, dass bei beiden Ausgestaltungsformen an dem dem Kompressor 78 nahe liegenden Endbereich das Ausgangselement 32 mit einer so genannten Hirthverzahnung 80 ausgebildet ist, die durch einen in der Fig. 2 auch erkennbaren Schraubbolzen 82 in Drehkopplungseingriff mit einer entsprechenden Hirthverzahnung am axialen Ende der Eingangswelle 76 gehalten ist.

In der Eingangswelle 76 ist ferner zumindest ein Fluidkanal 84 gebildet, welcher, versorgt durch eine Fluidpumpe, mit Druckfluid versorgt wird und dieses, wie die Fig. 2 es zeigt, einerseits in die Bereiche 86 speist, wo die Eingangswelle 76 am Kompressorgehäuse 74 beispielsweise über Gleitlagerungen gelagert ist. Hier ist der wenigstens eine Fluidkanal 84 also zu einer entsprechenden Lagerfläche der Eingangswelle 76 offen. Ferner führt dieser wenigstens eine Fluidkanal 84 zu dem axialen Endbereich 88 der Eingangswelle 76, wo deren Hirthverzahnung vorgesehen ist. Das so zugeführte unter Druck stehende Fluid, also beispielsweise Öl, kann in diesem Bereich der beiden kämmenden Hirthverzahnungen über einen dort auch gebildeten Zwischenraum einerseits nach radial außen ausströmen, um, wie dies ein Strömungspfeil P₁ in Fig. 1 veranschaulicht, in den Bereich des Drehentkopplungslagers 64 zu gelangen und dieses zu schmieren. Andererseits tritt das am axialen Ende der Eingangswelle 76 austretende Öl in einen radialen Innenraum 90 des Ausgangselements 32 ein und kann dann durch Öffnungen 92 im Ausgangselement 32 einerseits und Öffnungen 94 im erweiterten zylindrischen Bereich 16 des ersten Reibelemententrägers 12 nach radial außen in den Bereich der Reibelemente 18, 26 gelangen, wie durch den Pfeil P₂ gezeigt. Über weitere Öffnungen 96 kann ein weiterer Fluidstrom P₃ in den Bereich des Gleitlagers 34 gelangen. Auf diese Art und Weise wird eine vollständige Schmierung und auch eine Wärmeabfuhr aus den im Reibzustand thermisch belasteten Oberflächenbereichen möglich. Das unter Fliehkrafteinwirkung nach radial außen gelangende Fluid, also beispielsweise Öl, kann über Öffnungen 98 am im Wesentlichen zylindrischen Bereich 24 des zweiten Reibelemententrägers 22 nach radial außen gelangen und somit zu einem durch das Kompressorgehäuse 74 einerseits und beispielsweise das weitere Gehäuse 72 in der Ausgestaltungsform der Fig. 2 andererseits begrenzten Innenraum 100 und einen Fluidsumpf zurückgeleitet werden.

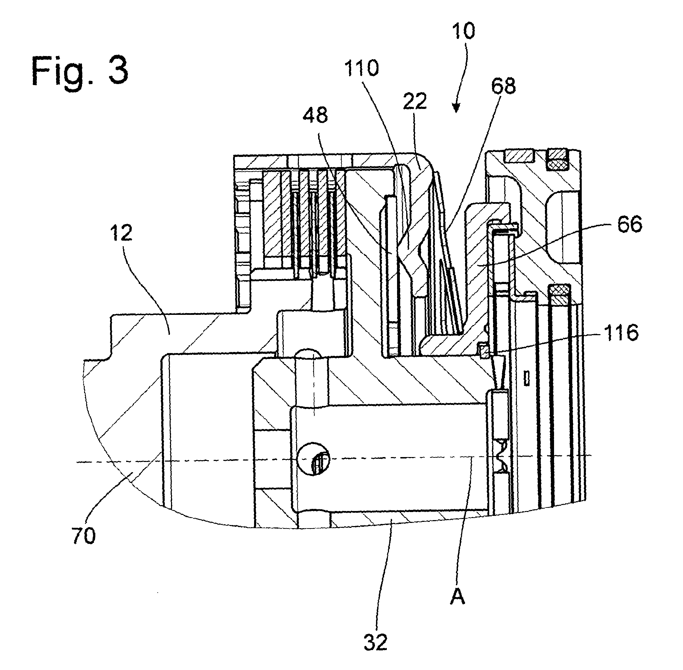

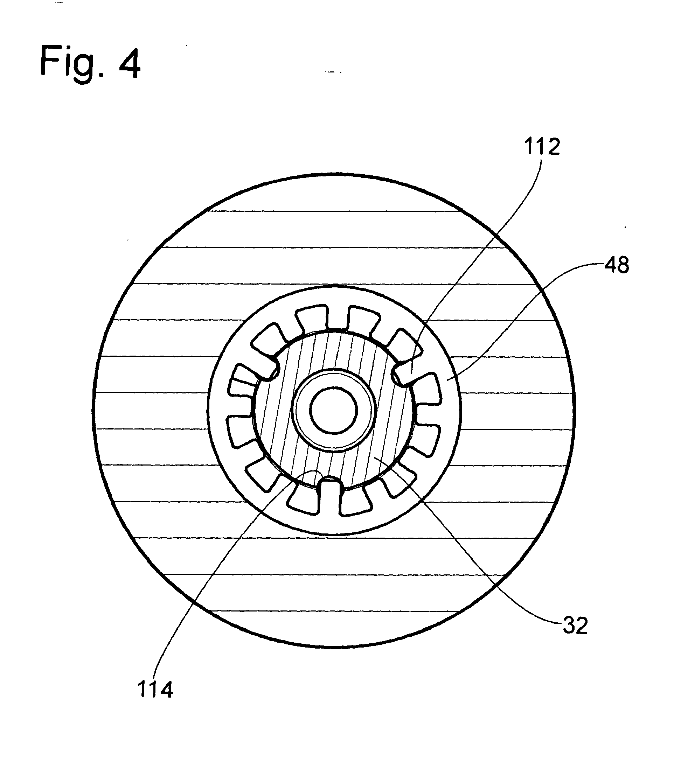

Die Fig. 3 zeigt eine Kopplungsanordnung 10, die in weiten Bereichen der vorangehend beschriebenen Kopplungsanordnung 10 entspricht, so dass auf die diesbezüglichen Ausführungen verwiesen werden kann. Man erkennt wieder im Unterschied zur Ausgestaltungsform der Fig. 1, dass der erste Reibelemententräger 12 hier am axialen Endbereich einer bei der Ausgestaltungsform der Fig. 2 ebenfalls erkennbaren Übertragungswelle 70 bereitgestellt ist. Auch erkennt man, dass am zweiten Reibelemententräger 22 unmittelbar durch Ausbilden einer beispielsweise ringartig um die Drehachse A umlaufenden Ausbauchung 110 ein Abstützbereich für das Kraftbeaufschlagungselement 48, also die Membran- bzw. Tellerfeder gebildet ist. Diese ist, wie dies die Fig. 4 zeigt, in ihrem radial inneren Bereich mit Federzungen versehen, die an den Außenumfang des nabenartigen Bereichs des Ausgangselements 32 heranreichen. Für drei der Federzungen 112 sind nutartige Einsenkungen 114 am Ausgangselement 32 gebildet, in welche durch axiales Aufschieben die Federzungen 112 eingreifen und somit eine Formschluss-Kopplung realisieren, die das Kraftbeaufschlagungselement 48 gegen Relativdrehung bezüglich des Ausgangselements 32 sichern. Dies kann selbstverständlich auch bei den vorangehend beschriebenen Ausgestaltungsformen so realisiert sein.

Man erkennt in der Fig. 3 weiter, dass dem Betätigungselement 66 am Ausgangselement 32 ein beispielsweise nach Art eines Sprengrings ausgebildeter Sicherungsring 116 zugeordnet ist. Dieser Sicherungsring 116 steht über den Außenumfang des nabenartigen Bereichs des Ausgangselements 32 hervor und bildet einen Bewegungsanschlag für das Betätigungselement 66 bei dessen Bewegung in Richtung vom Kraftbeaufschlagungselement 48 weg.

Durch diesen Sicherungsring 116, gegen welchen das Betätigungselement 66 sich unter der Vorspannwirkung des Vorspannelements 68 anlegen wird, wenn keine Druckfluid-Betätigungskraft erzeugt wird, ist einerseits eine definierte Ruheposition vorgegeben. Andererseits ist gewährleistet, dass eine auch das Betätigungselement umfassende Baueinheit erzeugt werden kann, welche im Wesentlichen das Ausgangselement 32, den zweiten Reibelemententräger 22, den ersten Reibelemententräger 12 und selbstverständlich auch die verschiedenen Gruppen von Reibelementen umfasst. Diese vormontierte Einheit kann dann als solche an Kunden ausgeliefert werden bzw. in ein Antriebssystem bzw. ein Fahrzeug integriert werden.

Es sei darauf hingewiesen, dass selbstverständlich auch bei den vorangehenden, mit Bezug auf die Fig. 1 und 2 beschriebenen Varianten ein derartiger Bewegungsanschlag für das Betätigungselement 66 realisiert sein könnte.

Durch die vorliegende Erfindung ist eine Kopplungsanordnung vorgesehen, bei welcher auf Grund der Tatsache, dass der abtriebsseitige, äußere zweite Reibelemententräger mit den daran getragenen Reibelementen axial bewegbar ist und das diesen beaufschlagende Kraftbeaufschlagungselement somit von der Kompressorseite her leicht zugänglich ist, in einfacher Weise die Betätigung erlangt werden, wobei sehr kurze Betätigungswege ohne den axialen Durchgriff insbesondere durch die Reibelemente hindurch erreichbar sind. Da bei Durchführung von Ausrückvorgängen der gesamte zweite Reibelemententräger 22 sich verlagert, kann die Reibphase der Reibelemente gegeneinander verkürzt werden und somit deren Belastung gemindert werden. Gleichzeitig ist innerhalb der Kopplungsanordnung 10, also zwischen den beiden Reibelemententrägern selbst, ein vollständiger Kraftrückschluss generiert, so dass im Einrückzustand irgendwelche Axialkräfte aufnehmende Lagerungen nicht belastet werden. Lediglich bei Durchführung von Auskuppelvorgängen wird bei Betätigung der Betätigungsanordnung und entsprechender Belastung der Kraftbeaufschlagungsanordnung eine entsprechende Axialkraft ausgeübt, welche durch die Kopplung des Ausgangselements mit der Eingangswelle in den Axiallagern der Eingangswelle aufgenommen werden kann. Weiterhin ist bei der erfindungsgemäßen Ausgestaltung dafür gesorgt, dass bei einer Schmierfluidzufuhr von radial innen unter Fliehkrafteinwirkung, insbesondere auch auf Grund der Rotation des Ausgangselements und des ersten Reibelemententrägers, eine zuverlässige Schmierung bzw. Wärmeabfuhr aus den reibend. bzw. gleitend belasteten Bauteilen erfolgen kann.

## Patentansprüche

1. Kopplungsanordnung, insbesondere zur wahlweisen Drehkopplung einer Eingangswelle eines Kompressors in einem Fahrzeug mit einem Antriebsorgan, umfassend:
- einen mit einem Antriebsorgan (14; 70) zur gemeinsamen Drehung um eine Drehachse (A) gekoppelten oder zu koppelnden ersten Reibelemententräger (12), mit welchem die Reibelemente (18) einer ersten Gruppe (20) von Reibelementen drehfest und bezüglich diesem axial bewegbar gekoppelt sind,
- einen zweiten Reibelemententräger (22), mit welchem die Reibelemente (26) einer zweiten Gruppe (28) von Reibelementen drehfest und bezüglich diesem axial bewegbar gekoppelt sind,
- ein mit einem Abtriebsorgan (76) zur gemeinsamen Drehung um die Drehachse (A) gekoppeltes oder zu koppelndes Ausgangselement (32), mit welchem der zweite Reibelemententräger (22) im Wesentlichen drehfest, axial bezüglich diesem bewegbar gekoppelt ist,
- eine Kraftbeaufschlagungsanordnung (46), durch welche die Reibelemente (18, 26) der ersten Gruppe (20) und der zweiten Gruppe (28) in Reibwechselwirkung miteinander pressbar sind,
- wobei an dem Ausgangselement (32) ein erstes axiales Widerlager (40) für die beiden Gruppen (20, 28) von Reibelementen gebildet ist und an dem zweiten Reibelemententräger (22) ein zweites axiales Widerlager (42) für die beiden Gruppen (20, 28) von Reibelementen gebildet ist,
- wobei die Kraftbeaufschlagungsanordnung (46) ein bezüglich des zweiten Reibelemententrägers (22) und des Ausgangselements (32) abgestützes und den zweiten Reibelemententräger (22) mit dem zweiten Widerlager (42) axial auf das Ausgangselement (32) mit dem ersten Widerlager (40) zu vorspannendes Kraftbeaufschlagungselement (48) umfasst,
- eine Zylinder/Kolben-Betätigungsanordnung (54) zur Beaufschlagung des Kraftbeaufschlagungselements (48) mit einer Betätigungskraft vorgesehen ist,
- das Kraftbeaufschlagungselement (48) membran- oder tellerfederartig ausgebildet ist,
**dadurch gekennzeichnet, dass** das Kraftbeaufschlagungselement (48) in seinem radial äußeren Bereich (50) bezüglich des Ausgangselements (32) abgestützt ist und in seinem radial inneren Bereich (52) durch eine Betätigungsanordnung (54) beaufschlagbar ist, wobei in einem Bereich (56) zwischen dem radial äußeren Bereich (50) und dem radial inneren Bereich (52) das Kraftbeaufschlagungselement (48) bezüglich des zweiten Reibelemententrägers (22) abgestützt ist.

2. Kopplungsanordnung nach Anspruch 1,
**dadurch gekennzeichnet, dass** die Betätigungsanordnung (54) ein mit dem Ausgangselement (32) drehbares und auf den radial inneren Bereich (52) des Kraftbeaufschlagungselements (48) einwirkendes. Betätigungselement (66) umfasst.

3. Kopplungsanordnung nach Anspruch 2,
**dadurch gekennzeichnet, dass** dem Betätigungselement (66) am Ausgangselement (32) ein Bewegungsanschlag (116) für die Bewegung in Richtung vom Kraftbeaufschlagungselement (48) weg zugeordnet ist.

## Claims

1. Coupling arrangement, in particular for the selective rotary coupling of an input shaft of a compressor in a vehicle to a drive member, comprising:
- a first friction-element carrier (12) which is coupled or to be coupled to a drive member (14; 70) for joint rotation about an axis of rotation (A) and by means of which the friction elements (18) of a first group (20) of friction elements are coupled fixedly in terms of rotation and axially movably with respect to the said friction-element carrier,
- a second friction-element carrier (22), by means of which the friction elements (26) of a second group (28) of friction elements are coupled fixedly in terms of rotation and axially movably with respect to the said second friction-element carrier,
- an output element (32) which is coupled or to be coupled to a driven member (76) for joint rotation about the axis of rotation (A) and to which the second friction-element carrier (22) is coupled essentially fixedly in terms of rotation and axially movably with respect to the latter,
- a force action arrangement (46), by means of which the friction elements (18, 26) of the first group (20) and of the second group (28) can be pressed in frictional interaction with one another,
- a first axial abutment (40) for the two groups (20, 28) of friction elements being formed on the output element (32), and a second axial abutment (42) for the two groups (20, 28) of friction elements being formed on the second friction-element carrier (22),
- the force action arrangement (46) comprising a force action element (48) supported with respect to the second friction-element carrier (22) and to the output element (32) and intended to prestress the second friction-element carrier (22) having a second abutment (42) axially onto the output element (32) having a first abutment (40),
- a cylinder/piston actuation arrangement (54) for acting with an actuating force upon the force action element (48) being provided,
- the force action element (48) being designed in a manner of a diaphragm spring or cup spring,
**characterized in that** the force action element (48) is supported in its radially outer region (50) with respect to the output element (32) and can be acted upon in its radially inner region (52) by an actuation arrangement (54), the force action element (48) being supported with respect to a second friction-element carrier (22) in a region (56) between the radially outer region (50) and the radially inner region (52).

2. Coupling arrangement according to Claim 1, **characterized in that** the actuation arrangement (54) comprises an actuation element (66) rotatable with the output element (32) and acting on the radially inner region (52) of the force action element (48).

3. Coupling arrangement according to Claim 2, **characterized in that** the actuation element (66) is assigned on the output element (32) with a movement stop (116) for movement in the direction away from the force action element (48).

## Revendications

1. Agencement d'accouplement, notamment pour l'accouplement rotatif sélectif d'un arbre d'entrée d'un compresseur dans un véhicule à un organe d'entraînement, comprenant :
- un premier support d'éléments de friction (12) accouplé ou devant être accouplé à un organe d'entraînement (14 ; 70) en vue d'une rotation commune autour d'un axe de rotation (A), avec lequel les éléments de friction (18) d'un premier groupe (20) d'éléments de friction sont accouplés de manière solidaire en rotation et déplaçable axialement par rapport à celui-ci,
- un deuxième support d'éléments de friction (22) avec lequel les éléments de friction (26) d'un deuxième groupe (28) d'éléments de friction sont accouplés de manière solidaire en rotation et déplaçable axialement par rapport à celui-ci,
- un élément de sortie (32) accouplé ou devant être accouplé à un organe de prise de force (76) pour la rotation commune autour de l'axe de rotation (A), avec lequel le deuxième support d'éléments de friction (22) est accouplé essentiellement de manière solidaire en rotation et déplaçable axialement par rapport à celui-ci,
- un agencement de sollicitation de force (46), par le biais duquel les éléments de friction (18, 26) du premier groupe (20) et du deuxième groupe (28) peuvent être pressés l'un avec l'autre en interaction de frottement,
- un premier palier conjugué axial (40) pour les deux groupes (20, 28) d'éléments de friction étant formé sur l'élément de sortie (32), et un deuxième palier conjugué (42) pour les deux groupes (20, 28) d'éléments de friction étant formé sur le deuxième support d'éléments de friction (22),
- l'agencement de sollicitation de force (46) comprenant un élément de sollicitation de force (48) supporté par rapport au deuxième support d'éléments de friction (22) et à l'élément de sortie (32) et précontraignant le deuxième support d'éléments de friction (22) avec le deuxième palier conjugué (42) axialement vers l'élément de sortie (32) avec le premier palier conjugué (40),
- un agencement d'actionnement à cylindre/piston (54) pour solliciter l'élément de sollicitation de force (48) avec une force d'actionnement étant prévu,
- l'élément de sollicitation de force (48) étant réalisé en forme de membrane ou de ressort à coupelle,
**caractérisé en ce que** l'élément de sollicitation de force (48) est supporté dans sa région radialement extérieure (50) par rapport à l'élément de sortie (32) et peut être sollicité dans sa région radialement intérieure (52) par un agencement d'actionnement (54), l'élément de sollicitation de force (48) étant supporté par rapport au deuxième support d'éléments de friction (22) dans une région (56) entre la région radialement extérieure (50) et la région radialement intérieure (52).

2. Agencement d'accouplement selon la revendication 1,
**caractérisé en ce que** l'agencement d'actionnement (54) comprend un élément d'actionnement (66) pouvant tourner avec l'élément de sortie (32) et agissant sur la région radialement intérieure (52) de l'élément de sollicitation de force (48).

3. Agencement d'accouplement selon la revendication 2,
**caractérisé en ce que** l'on associe à l'élément d'actionnement (66) sur l'élément de sortie (32) une butée de déplacement (116) pour le déplacement dans la direction provenant de l'élément de sollicitation de force (48).
